# EUROPÄISCHE PATENTSCHRIFT

(11) **EP 3 418 095 B1**
(45) Veröffentlichungstag und Bekanntmachung des Hinweises auf die Patenterteilung: **24.04.2019**
(21) Anmeldenummer: 17177388.0
(22) Anmeldetag: 22.06.2017
(51) Int. Cl.: B60K 15/03, B60K 15/035

(54) **ENTLÜFTUNGSNIPPEL UND TANKVORRICHTUNG**
BLEED NIPPLE AND TANK ASSEMBLY
PURGEUR ET DISPOSITIF DE RÉSERVOIR

(43) Veröffentlichungstag der Anmeldung: 26.12.2018
(73) Patentinhaber: Magna Steyr Fuel Systems GesmbH, 8261 Sinabelkirchen (AT)
(72) Erfinder: SCHMID, Michael, 8020 Graz (AT); MAREK, Kai, 8272 Hartl (AT); NEUMEISTER, Stefan, 8321 St. Margarethen/R. (AT)
(74) Vertreter: Zangger, Bernd

(56) Entgegenhaltungen:
- EP-A1- 3 118 042
- EP-A2- 0 947 368
- EP-A2- 1 705 052
- US-A1- 2011 139 778

## Beschreibung

### Gebiet der Erfindung

Die vorliegende Erfindung betrifft einen Entlüftungsnippel zur Entlüftung eines Tankbauteils aus Kunststoff, eine Tankvorrichtung umfassend einen solchen Entlüftungsnippel und ein Verfahren zur Herstellung einer solchen Tankvorrichtung.

### Stand der Technik

Entlüftungsnippel, also Entlüftungsvorrichtungen die an einer Öffnung eines Tankbauteils befestigt werden können, um dieses Tankbauteil über Fluidwege im Inneren des Entlüftungsnippels und gegebenenfalls über am Entlüftungsnippel angeschlossene Entlüftungsleitungen entlüften und/oder belüften zu können, sind an sich bekannt.

Solche Entlüftungsnippel werden insbesondere zur Entlüftung von Tanks und von Einfüllrohren zur Befüllung von Tanks verwendet, um eine ausreichende Entlüftung und/oder Belüftung während des Betriebs und/oder während der Betankung des Tanks zu ermöglichen.

Beispielsweise offenbart die EP 3118042 A1 einen solchen Entlüftungsnippel.

Im Zusammenhang mit Kunststofftanks werden in jüngerer Zeit auch Entlüftungsnippel aus Kunststoff verwendet, die in einfacher Weise auf einen Kunststofftank oder weitere Kunststoff-Komponenten des Tanks aufgeschweißt werden können.

Gerade bei Verwendung von Kunststoffkomponenten im Zusammenhang mit Kraftstofftanks in Fahrzeugen, gilt es jedoch zur Schonung der Umwelt, unerwünschte Kohlenwasserstoff-Emissionen durch den Kunststoff möglichst weitgehend zu verhindern.

Aus der gattungsgemäßen US 2011/139778 A1 ist ein Kraftstoffanbauteil bekannt, mit einem ersten Bereich der aus wenigstens einem ersten Kunststoff besteht und mit einem zweiten Bereich, der aus einem zweiten Kunststoff besteht, wobei es sich beim ersten Kunststoff um einen kraftstoffbeständigen Kunststoff handelt und wobei es sich beim zweiten Kunststoff um einen nicht kraftstoffbeständigen Kunststoff handelt, wobei das Kraftstoffanbauteil ein Tankentlüftungsventil darstellen kann und wobei das Kraftstoffanbauteil einstückig geformt ist. Das Kraftstoffanbauteil kann einen ringförmigen Flanschkörper als Kragen aufweisen.

### Zusammenfassung der Erfindung

Es ist eine Aufgabe der Erfindung, einen Entlüftungsnippel zur Entlüftung eines Tankbauteils aus Kunststoff anzugeben, der unerwünschte Kohlenwasserstoff-Emissionen im Bereich des Entlüftungsnippels reduziert. Weitere Aufgaben der Erfindung sind es eine Tankvorrichtung umfassend einen Entlüftungsnippel anzugeben, sowie ein Herstellungsverfahren für eine solche Tankvorrichtung, wobei stets die Kohlenwasserstoff-Emissionen im Betrieb der Tankvorrichtung reduziert sein sollen.

Die Lösung der Aufgabe erfolgt durch eine Entlüftungsnippel zur Entlüftung eines Tankbauteils aus Kunststoff, mit Merkmalen gemäß Anspruch 1.

Der Entlüftungsnippel weist einen Flansch auf, wobei der Flansch ringförmig um eine Entlüftungsöffnung des Entlüftungsnippels angeordnet ist, wobei der Flansch aus Kunststoff besteht und auf das Tankbauteil geschweißt werden kann, wobei der Flansch einen ersten und einen zweiten ringförmigen Kragen aufweist, wobei der erste und zweite Kragen koaxial zueinander angeordnet sind, wobei zwischen dem ersten und zweiten Kragen ein ringförmiger Hohlraum zur Aufnahme eines Dichtmittels und/oder Klebstoffs vorgesehen ist.

Der Entlüftungsnippel weist erfindungsgemäß eine Einspritzbohrung auf, die den Außenraum, auch nach Verschweißung des Entlüftungsnippels mit dem Tankbauteil, mit dem ringförmigen Hohlraum verbindet, so dass der ringförmige Hohlraum von außen zugänglich wird und das Dichtmittel und/oder der Klebstoff durch die Einspritzbohrung, auch nach Verschweißung mit dem Tankbauteil, eingebracht werden kann.

Erfindungsgemäß ist ein Flansch zur Befestigung eines Entlüftungsnippels mit zwei koaxialen Kragen ausgebildet, so dass die beiden Kragen einen Ringraum ausbilden, der dem zu verschweißenden Tankbauteil zugewandt ist, so dass der ringförmige Hohlraum insbesondere durch eine Fläche des befestigten Tankbauteils abgeschlossen werden kann.

Der Flansch mit den beiden Kragen, die koaxial um die Entlüftungsöffnung des Entlüftungsnippels angeordnet sind, kann auf das Tankbauteil geschweißt werden, insbesondere über eine entsprechende Entlüftungsöffnung des Tankbauteils selbst, so dass eine Entlüftung des Tankbauteils über den Entlüftungsnippel erfolgen kann.

Durch einen derartigen Entlüftungsnippel wird ein ringförmiger Hohlraum im Bereich der Verschweißung des Entlüftungsnippels zur Verfügung gestellt, der mit einem Dichtmittel bzw. Klebstoff gefüllt werden kann.

Durch diese Anordnung von Dichtmittel und/oder Klebstoff im Bereich der Verschweißung werden Schwachstellen der Barriere von Kohlenwasserstoff-Emissionen durch die Verschweißung des Entlüftungsnippels am Tankbauteil, die zu erhöhter Permeation in diesem Bereich führen können, verhindert.

Besonders bevorzugt weist der Entlüftungsnippel auch eine Entlüftungsbohrung auf, die den Außenraum, auch nach Verschweißung des Entlüftungsnippels mit dem Tankbauteil, mit dem ringförmigen Hohlraum verbindet, so dass Luft durch die Entlüftungsbohrung, auch nach Verschweißung mit dem Tankbauteil, entweichen kann. Insbesondere kann so die Luft aus dem Hohlraum während der Befüllung mit dem Dichtmittel bzw. Klebstoff aus dem Hohlraum hinaus geführt werden.

Die Entlüftungsbohrung ist vorzugsweise an der, der Einspritzbohrung gegenüberliegenden Seite des ringförmigen Hohlraums angeordnet, so dass sie dort in den ringförmigen Hohlraum mündet.

Der Entlüftungsnippel weist bevorzugt zumindest einen ersten Verbindungstutzen auf, wobei der erste Verbindungsstutzen mit der Entlüftungsöffnung fluidverbunden oder fluidverbindbar ist, beispielsweise über ein Ventil, wobei der erste Verbindungsstutzen bevorzugt Halterippen aufweist. Die Halterippen können zur Befestigung eines Schlauches oder einer anderen Verbindungsleitung dienen. Der erste Verbindungsstutzen kann insbesondere etwa normal auf den Flansch des Entlüftungsnippels stehen, so dass er seitlich vom verbauten Entlüftungsnippel absteht oder auch den Flansch verlängern, so dass er in Einbaulage normal auf die Oberfläche des Tankbauteils steht.

Der Entlüftungsnippel kann zumindest einen vom ersten Verbindungsstutzen verschiedenen zweiten Verbindungstutzen aufweisen, wobei der zweite Verbindungsstutzen mit der Entlüftungsöffnung fluidverbunden oder fluidverbindbar ist, wobei der zweite Verbindungsstutzen bevorzugt Halterippen aufweist. Der zweite Verbindungsstutzen kann ebenfalls seitlich vom Entlüftungsnippel abstehend, dem ersten Verbindungsstutzen gegenüberliegend angeordnet sein.

Eine Tankvorrichtung kann erfindungsgemäß ein Tankbauteil aus Kunststoff sowie einen Entlüftungsnippel zur Entlüftung des Tankbauteils aus Kunststoff umfassen, wobei der Entlüftungsnippel wie zuvor beschrieben ausgebildet sein kann, wobei der erste und/oder der zweite Kragen des Entlüftungsnippels auf das Tankbauteil geschweißt ist, wobei zwischen dem ersten und zweiten Kragen im ringförmigen Hohlraum das Dichtmittel und/oder der Klebstoff aufgenommen ist.

Das Tankbauteil das mit dem Entlüftungsnippel versehen ist, ist dabei bevorzugt ein Kunststofftank oder ein Kunststoff-Einfüllrohr.

Das Dichtmittel und/oder der Klebstoff kann vorzugsweise ein Produkt der Familie Loctite (R) 5810 (TM) der Firma Henkel Corporation sein, insbesondere Loctite (R) 5810B (TM).

Ein erfindungsgemäßes Verfahren zur Herstellung einer solchen Tankvorrichtung kann umfassen, dass der Entlüftungsnippel auf das Tankbauteil mit dem ersten und/oder zweiten Kragen des Flansches geschweißt wird und danach das Dichtmittel und/oder der Klebstoff in den ringförmigen Hohlraum eingespritzt wird. Das Einspritzen kann insbesondere durch die Einspritzbohrung des Entlüftungsnippels erfolgen, die in den Hohlraum führt. Insbesondere kann das Dichtmittel bzw. der Klebstoff so lange in den Hohlraum eingespritzt werden, bis es bzw. er an der Entlüftungsbohrung des Hohlraumes wieder austritt.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Entlüftungsnippels von unten.
- Fig. 2: ist eine dreidimensionale Darstellung des erfindungsgemäßen Entlüftungsnippels gemäß Fig. 1 von oben.
- Fig. 3: ist eine Draufsicht auf den erfindungsgemäßen Entlüftungsnippel gemäß Fig. 1 von unten.
- Fig. 4: ist eine Schnittansicht des erfindungsgemäßen Entlüftungsnippels gemäß Fig. 3, mittig geschnitten.
- Fig. 5: ist eine Schnittansicht des erfindungsgemäßen Entlüftungsnippels gemäß Fig. 3, seitlich geschnitten.

### Detaillierte Beschreibung der Erfindung

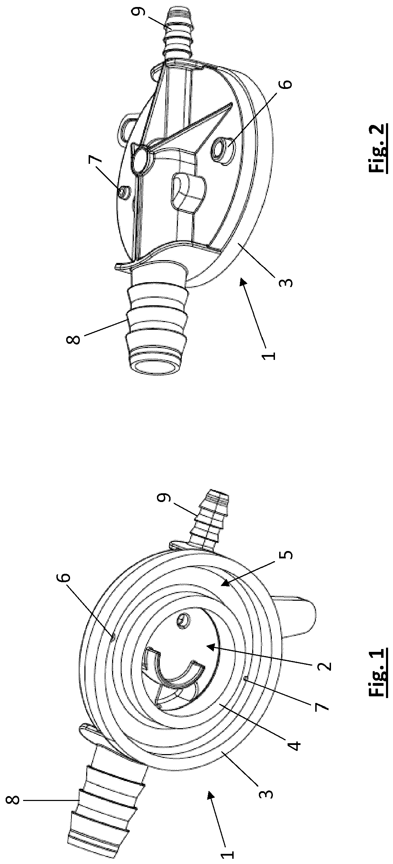

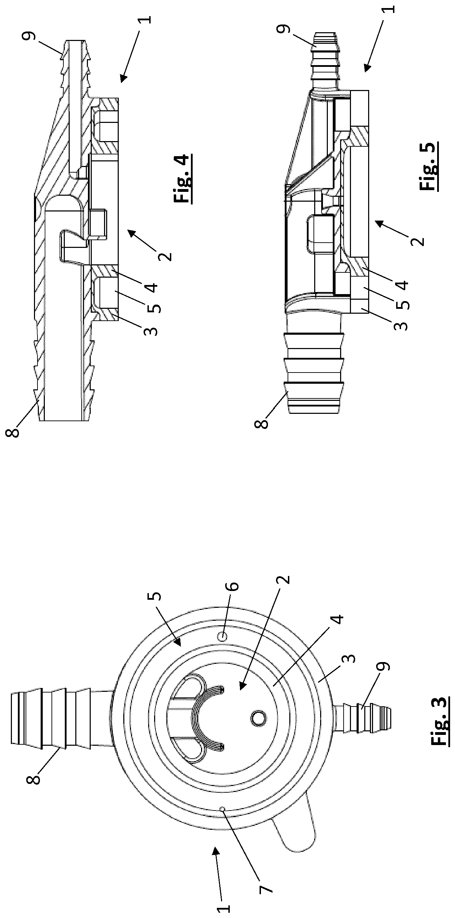

In den Fig. 1-5 ist jeweils der selbe erfindungsgemäße Entlüftungsnippel zur Entlüftung eines Tankbauteils aus Kunststoff in verschiedenen Ansichten dargestellt, welcher einen Flansch 1 aufweist, wobei der Flansch 1 ringförmig um eine Entlüftungsöffnung 2 des Entlüftungsnippels angeordnet ist.

Der Flansch 1 besteht, ebenso wie der gesamte Entlüftungsnippel, aus Kunststoff und kann auf ein Tankbauteil, insbesondere einen Kunststofftank oder ein Kunststoff-Einfüllrohr geschweißt werden, insbesondere so, dass die zentrale Entlüftungsöffnung 2 des Entlüftungsnippels über einer entsprechenden Entlüftungsöffnung des Tankbauteils angeordnet ist, so dass eine Entlüftung des Tankbauteils über den Entlüftungsnippel erfolgen kann.

Zum Verschweißen weist der Flansch 1 einen ersten ringförmigen Kragen 3 und einen zweiten ringförmigen Kragen 4 auf, wobei der erste und zweite Kragen 3, 4 koaxial zueinander und koaxial zur Entlüftungsöffnung 2 des Entlüftungsnippels angeordnet sind. Beide ringförmigen Kragen 3 und 4 werden üblicherweise mit dem Tankbauteil verschweißt.

Zwischen dem ersten Kragen 3 und dem zweiten Kragen 4 ist ein ringförmiger Hohlraum 5 zur Aufnahme eines Dichtmittels und/oder Klebstoffs ausgebildet. In späterer Verwendung ist dieser Hohlraum 5 auch mit dem Dichtmittel und/oder Klebstoff gefüllt. Das Dichtmittel und/oder der Klebstoff kann zum Beispiel Loctite (R) 5810B (TM) sein.

Zum Einbringen des Klebstoffs bzw. Dichtmittels ist am Flansch 1 eine Einspritzbohrung 6 parallel zur Achse des Flansches 1 ausgebildet, die den Außenraum, also einen Raum der auch nach Verschweißung des Entlüftungsnippels außerhalb des Entlüftungsnippels liegt, mit dem ringförmigen Hohlraum 5 verbindet, so dass das Dichtmittel und/oder der Klebstoff durch die Einspritzbohrung 6, auch nach Verschweißung mit dem Tankbauteil, eingebracht werden kann.

Am gegenüberliegenden Ende des Hohlraums 5 weist der Flansch 1 des Entlüftungsnippels eine Entlüftungsbohrung 7 auf, die ebenfalls den Außenraum, auch nach Verschweißung des Entlüftungsnippels mit dem Tankbauteil, mit dem ringförmigen Hohlraum 5 verbindet, so dass Luft durch die Entlüftungsbohrung 7, auch nach Verschweißung mit dem Tankbauteil, entweichen kann.

Beim Befüllen des Hohlraums 5 mit Dichtmittel bzw. Klebstoff, kann so lange das Dichtmittel bzw. der Klebstoff über die Einspritzbohrung 6 in den Ringraum 5 eingebracht werden, bis das Dichtmittel bzw. der Klebstoff durch die Entlüftungsbohrung 7 wieder austritt.

Der Entlüftungsnippel weist einen ersten Verbindungstutzen 8 auf und einen kleineren zweiten Verbindungstutzen 9, die beide mit der Entlüftungsöffnung 2 durch den Flansch 1 fluidverbunden sind und dem Anschluss an eine Verbindungsleitung, beispielsweise einen Schlauch, dienen. Die Verbindungsleitung bzw. der Schlauch kann dabei jeweils über konisch sich erweiternde Halterippen an den Verbindungsstutzen 8, 9 gehalten werden.

### Bezugszeichenliste

- 1: Flansch
- 2: Entlüftungsöffnung
- 3: erster Kragen
- 4: zweiter Kragen
- 5: ringförmiger Hohlraum
- 6: Einspritzbohrung
- 7: Entlüftungsbohrung
- 8: erster Verbindungsstutzen
- 9: zweiter Verbindungsstutzen

## Patentansprüche

1. Entlüftungsnippel zur Entlüftung eines Tankbauteils aus Kunststoff, wobei der Entlüftungsnippel einen Flansch (1) aufweist, wobei der Flansch (1) ringförmig um eine Entlüftungsöffnung (2) des Entlüftungsnippels angeordnet ist, wobei der Flansch (1) aus Kunststoff besteht und auf das Tankbauteil geschweißt werden kann, wobei der Flansch (1) einen ersten ringförmigen Kragen (3) und einen zweiten ringförmigen Kragen (4) aufweist, wobei der erste und zweite Kragen (3, 4) koaxial zueinander angeordnet sind, wobei zwischen dem ersten und zweiten Kragen (3, 4) ein ringförmiger Hohlraum (5) zur Aufnahme eines Dichtmittels und/oder Klebstoffs vorgesehen ist,
**dadurch gekennzeichnet, dass** der Entlüftungsnippel eine Einspritzbohrung (6) aufweist, die den Außenraum, auch nach Verschweißung des Entlüftungsnippels mit dem Tankbauteil, mit dem ringförmigen Hohlraum (5) verbindet, so dass das Dichtmittel und/oder der Klebstoff durch die Einspritzbohrung (6), auch nach Verschweißung mit dem Tankbauteil, eingebracht werden kann.

2. Entlüftungsnippel nach Anspruch 1,
**dadurch gekennzeichnet, dass** der Entlüftungsnippel eine Entlüftungsbohrung (7) aufweist, die den Außenraum, auch nach Verschweißung des Entlüftungsnippels mit dem Tankbauteil, mit dem ringförmigen Hohlraum (5) verbindet, so dass Luft durch die Entlüftungsbohrung (7), auch nach Verschweißung mit dem Tankbauteil, entweichen kann.

3. Entlüftungsnippel nach Anspruch 2,
**dadurch gekennzeichnet, dass** die Entlüftungsbohrung (7) an der, der Einspritzbohrung (6) gegenüberliegenden Seite des ringförmigen Hohlraums (5) in den ringförmigen Hohlraum (5) mündet.

4. Entlüftungsnippel nach zumindest einem der vorhergehenden Ansprüche,
**dadurch gekennzeichnet, dass** der Entlüftungsnippel zumindest einen ersten Verbindungstutzen (8) aufweist, wobei der erste Verbindungsstutzen (8) mit der Entlüftungsöffnung (2) fluidverbunden oder fluidverbindbar ist, wobei der erste Verbindungsstutzen (8) bevorzugt Halterippen aufweist.

5. Entlüftungsnippel nach Anspruch 4,
**dadurch gekennzeichnet, dass** der Entlüftungsnippel zumindest einen vom ersten Verbindungsstutzen (8) verschiedenen zweiten Verbindungstutzen (9) aufweist, wobei der zweite Verbindungsstutzen (9) mit der Entlüftungsöffnung (2) fluidverbunden oder fluidverbindbar ist, wobei der zweite Verbindungsstutzen (9) bevorzugt Halterippen aufweist.

6. Tankvorrichtung umfassend ein Tankbauteil aus Kunststoff sowie einen Entlüftungsnippel zur Entlüftung des Tankbauteils aus Kunststoff, wobei der Entlüftungsnippel nach einem der vorhergehenden Ansprüche ausgebildet ist, wobei der erste und/oder der zweite Kragen (3, 4) des Entlüftungsnippels auf das Tankbauteil geschweißt ist, wobei zwischen dem ersten und zweiten Kragen (3, 4) im ringförmigen Hohlraum (5) das Dichtmittel und/oder der Klebstoff aufgenommen ist.

7. Tankvorrichtung nach Anspruch 6,
**dadurch gekennzeichnet, dass** das Tankbauteil ein Kunststofftank ist oder ein Kunststoff-Einfüllrohr.

8. Tankvorrichtung nach Anspruch 6 oder 7,
**dadurch gekennzeichnet, dass** das Dichtmittel und/oder der Klebstoff Loctite (R) 5810 (TM), insbesondere Loctite (R) 5810B (TM), ist.

9. Verfahren zur Herstellung einer Tankvorrichtung nach einem der Ansprüche 6 bis 8,
**dadurch gekennzeichnet, dass** der Entlüftungsnippel auf das Tankbauteil mit dem ersten und/oder zweiten Kragen (3, 4) des Flansches (1) geschweißt wird und danach das Dichtmittel und/oder der Klebstoff in den ringförmigen Hohlraum (5) eingespritzt wird.

## Claims

1. Ventilation nipple for ventilating a tank component of plastics material, wherein the ventilation nipple has a flange (1), wherein the flange (1) is arranged in an annular manner around a ventilation opening (2) of the ventilation nipple, wherein the flange (1) comprises plastics material and can be welded to the tank component, **wherein** the flange (1) has a first annular collar (3) and a second annular collar (4), wherein the first and the second collars (3, 4) are arranged coaxially with respect to each other, wherein an annular hollow space (5) for receiving a sealing agent and/or adhesive is provided between the first and second collars (3, 4),
**characterised in that** the ventilation nipple has an injection hole (6) which connects the outer space, including after welding of the ventilation nipple to the tank component, to the annular hollow space (5) so that the sealing agent and/or the adhesive can be introduced through the injection hole (6), even after welding to the tank component.

2. Ventilation nipple according to claim 1,
**characterised in that** the ventilation nipple has a ventilation hole (7) which connects the outer space, including after welding of the ventilation nipple to the tank component, to the annular space (5) so that air can escape through the ventilation hole (7) even after welding to the tank component.

3. Ventilation nipple according to claim 2,
**characterised in that** the ventilation hole (7) opens at the side of the annular hollow space (5) opposite the injection hole (6) into the annular hollow space (5).

4. Ventilation nipple according to at least one of the preceding claims,
**characterised in that** the ventilation nipple has at least a first connection piece (8), wherein the first connection piece (8) is connected or can be connected in fluid terms to the ventilation opening (2), wherein the first connection piece (8) preferably has retention ribs.

5. Ventilation nipple according to claim 4,
**characterised in that** the ventilation nipple has at least a second connection piece (9) which is different from the first connection piece (8), wherein the second connection piece (9) is connected or can be connected in fluid terms to the ventilation opening (2), wherein the second connection piece (9) preferably has retention ribs.

6. Tank device comprising a tank component of plastics material and a ventilation nipple for ventilating the tank component of plastics material, wherein the ventilation nipple is constructed according to any one of the preceding claims, wherein the first and/or the second collar (3, 4) of the ventilation nipple is welded to the tank component, wherein the sealing agent and/or the adhesive is received between the first and second collar (3, 4) in the annular hollow space (5).

7. Tank device according to claim 6,
**characterised in that** the tank component is a plastics material tank or a plastics material filling pipe.

8. Tank device according to claim 6 or 7,
**characterised in that** the sealing agent and/or the adhesive is Loctite (R) 5810 (TM), in particular Loctite (R) 5810B (TM).

9. Method for producing a tank device according to any one of claims 6 to 8,
**characterised in that** the ventilation nipple is welded to the tank component with the first and/or second collar (3, 4) of the flange (1), and the sealing agent and/or the adhesive is subsequently injected into the annular hollow space (5).

## Revendications

1. Purgeur destiné à purger un élément de réservoir en matière plastique, dans lequel le purgeur présente un flasque (1), dans lequel le flasque (1) est disposé sous forme annulaire autour d'un orifice de purge (2) du purgeur, dans lequel le flasque (1) est constitué de matière plastique et peut être soudé sur l'élément de réservoir, dans lequel le flasque (1) présente un premier rebord annulaire (3) et un second rebord annulaire (4), dans lequel le premier et le second rebords (3, 4) sont disposés de façon coaxiale l'un à l'autre, dans lequel il est prévu entre le premier et le second rebords (3, 4) un espace creux annulaire (5) destiné à recevoir un moyen d'étanchéité et/ou un adhésif, **caractérisé en ce que** le purgeur présente un trou d'injection (6), qui relie l'espace extérieur, même après le soudage du purgeur à l'élément de réservoir, à l'espace creux annulaire (5), de telle manière que le moyen d'étanchéité et/ou l'adhésif puisse être introduit à travers le trou d'injection (6), même après le soudage à l'élément de réservoir.

2. Purgeur selon la revendication 1, **caractérisé en ce que** le purgeur présente un trou de purge (7), qui relie l'espace extérieur, même après le soudage du purgeur à l'élément de réservoir, à l'espace creux annulaire (5), de telle manière que de l'air puisse s'échapper à travers le trou de purge (7), même après le soudage à l'élément de réservoir.

3. Purgeur selon la revendication 2, **caractérisé en ce que** le trou de purge (7) débouche dans l'espace creux annulaire (5) sur le côté de l'espace creux annulaire (5) opposé au trou d'injection (6).

4. Purgeur selon au moins une des revendications précédentes, **caractérisé en ce que** le purgeur présente au moins un premier embout de raccordement (8), dans lequel le premier embout de raccordement (8) est ou peut être raccordé fluidiquement à l'orifice de purge (2), dans lequel le premier embout de raccordement (8) présente de préférence des nervures de retenue.

5. Purgeur selon la revendication 4, **caractérisé en ce que** le purgeur présente au moins un second embout de raccordement (9), différent du premier embout de raccordement (8), dans lequel le second embout de raccordement (9) est ou peut être raccordé fluidiquement à l'orifice de purge (2), dans lequel le second embout de raccordement (9) présente de préférence des nervures de retenue.

6. Dispositif de réservoir comprenant un élément de réservoir en matière plastique ainsi qu'un purgeur destiné à purger l'élément de réservoir en matière plastique, dans lequel le purgeur est réalisé selon l'une quelconque des revendications précédentes, dans lequel le premier et/ou le second rebord(s) (3, 4) du purgeur est/sont soudé(s) à l'élément de réservoir, dans lequel le moyen d'étanchéité et/ou l'adhésif est logé dans l'espace creux annulaire (5) entre le premier et le second rebords (3, 4).

7. Dispositif de réservoir selon la revendication 6, **caractérisé en ce que** l'élément de réservoir est un réservoir en matière plastique ou un tuyau de remplissage en matière plastique.

8. Dispositif de réservoir selon une revendication 6 ou 7, **caractérisé en ce que** le moyen d'étanchéité et/ou l'adhésif est la Loctite® 5810™, en particulier la Loctite® 5810B™.

9. Procédé de fabrication d'un dispositif de réservoir selon l'une quelconque des revendications 6 à 8, **caractérisé en ce que** l'on soude le purgeur sur l'élément de réservoir avec le premier et/ou le second rebord(s) (3, 4) du flasque (1) et on injecte ensuite le moyen d'étanchéité et/ou l'adhésif dans l'espace creux annulaire (5).
